# EUROPEAN PATENT SPECIFICATION

(11) **EP 1 734 020 B1**
(45) Date of publication and mention of the grant of the patent: **08.08.2012**
(21) Application number: 05727171.0
(22) Date of filing: 24.03.2005
(51) Int. Cl.: C03C 25/10, C08J 5/04, C08K 9/08, D06H 7/00, D06M 13/513, D06M 15/568, C08L 77/00, C03C 25/28, C03C 25/30, C03C 25/32, C03C 25/40

(54) **PROCESS FOR PRODUCTION OF COPPED STRANDS**
VERFAHREN ZUR HERSTELLUNG VON GESCHNITTENEN GLASSPINNFASERN
PROCÉDÉ DE FABRICATION DE BRINS COUPÉS

(30) Priority: 25.03.2004 JP 2004089995
(43) Date of publication of application: 20.12.2006
(73) Proprietor: Owens Corning Manufacturing Ltd., Tokyo 105-0001 (JP)
(72) Inventor: NIINO, Y., c/o Owens Corning Manufacturing Ltd, Minato-ku,Tokyo ,105-0001 (JP); MASUJIMA, Kenichiro co owens Corning Manufacturing, Minato-ku,Tokyo 105-0001 (JP)
(74) Representative: Hartz, Nikolai
(86) International application number: PCT/JP2005/005434
(87) International publication number: WO 2005/092814

(56) References cited:
- JP-A- 6 128 479
- JP-A- 2000 281 391
- JP-A- 2003 201 671
- US-A- 5 236 982
- US-A1- 2001 047 050
- US-B1- 6 365 272
- ANONYMOUS: "Sizing composition for glass fibers used to reinforce plastics" RESEARCH DISCLOSURE, MASON PUBLICATIONS, HAMPSHIRE, GB, vol. 381, no. 31, 1 January 1996 (1996-01-01), XP007120815 ISSN: 0374-4353

## Description

### TECHNICAL FIELD

The present invention relates to a process for producing chopped strands which provide favorable dispersibility of glass fibers in molding material pellets and are excellent in releasability at the time of molding. A fiber-reinforced thermoplastic resin molding material of e.g. a polyamide resin using the chopped strands is also disclosed.

### BACKGROUND ART

US-B 6,365,272 discloses a system for preparing glass fiber pellets having low discoloration.

Heretofore, a fiber polyamide molding material has been known, which is obtained by kneading a molten polyamide resin as the matrix resin with chopped strands obtained by cutting reinforced fibers and extruding the kneaded product into fibers by e.g. an extruder, and chopping them to obtain pellets.

The chopped strands used for the fiber-reinforced polyamide molding material are required to be subjected to a surface treatment with an appropriate sizing agent so as to improve the mechanical strength and the water resistance of the fiber-reinforced polyamide molding material to be obtained and thus a molded product obtained by molding the molding material. In such a case, it is essential to select a favorable sizing agent, and various sizing agents therefor have been studied.

For example, Patent Document 1 discloses a thermoplastic resin obtained by reinforcing a thermoplastic resin with glass fiber chopped strands subjected to a surface treatment with a copolymer of maleic anhydride with an unsaturated monomer and a silane coupling agent. Patent Document 1 discloses remarkable improvement in the mechanical strength and the water resistance of the polyamide resin molding material to be obtained and a molded product thereof.

However, there have had problems such that when a molded product is prepared by using the thermoplastic resin reinforced by glass fiber strands treated with the sizing agent, the molded product tends to be colored yellow or the like, thus deteriorating the color tone, the dispersion of the glass fibers in the molding pellets tends to be poor, and the releasability from a mold when the molded product is taken out at the time of injection molding tends to be poor.
Patent Document 1: JP-A-60-44535

### DISCLOSURE OF THE INVENTION

### OBJECT TO BE ACCOMPLISHED BY THE INVENTION

The present invention has been made to overcome the above problems, and its object is to provide a process for producing chopped strands capable of giving a molded product of which the mechanical strength and the water resistance will not be impaired and of which the color tone will not be deteriorated, capable of providing favorable dispersibility of glass fibers in molding material pellets and being excellent in the releasability at the time of molding.

### MEANS TO ACCOMPLISH THE OBJECT

The present inventors have conducted extensive studies to achieve the above object and as a result, have found that the above object can be achieved by glass fiber chopped strands having glass fiber strands consisting of glass filaments immediately after spinning subjected to a surface treatment with a sizing agent having a specific composition, and achieved the present invention.

Namely, the present invention provides the following.
(1) A process for producing chopped strands, which comprises subjecting glass fiber strands consisting of glass filaments spun from a bushing to a surface treatment with a sizing agent comprising, in terms of solid content, 100 parts by mass of an unsaturated copolymer of maleic anhydride with an unsaturated monomer, from 10 to 90 parts by mass of a polyurethane resin and from 5 to 100 parts by mass of a silane coupling agent, and then chopping the obtained strands.
(2) The process for producing chopped strands according to the above (1), wherein the sizing agent further contains an acrylic acid polymer or a copolymer of acrylic acid with at least one monomer in an amount of from 5 to 100 parts by mass in terms of solid content per 100 parts by mass of the unsaturated copolymer of maleic anhydride with an unsaturated monomer.
(3) The process for producing chopped strands according to the above (1) or (2), wherein the sizing agent further contains a fluorescent brightening agent.
(4) The process for producing chopped strands according to any one of the above (1) to (3), wherein the content of maleic anhydride in the unsaturated copolymer of maleic anhydride with an unsaturated monomer is from 30 to 75 mol%.
(5) The process for producing chopped strands according to any one of the above (1) to (4), wherein the unsaturated copolymer of maleic anhydride with an unsaturated monomer is soluble in an alkaline aqueous medium.
(6) The process for producing chopped strands according to any one of the above (1) to (5), wherein the polyol component constituting the polyurethane resin is an aliphatic ether.
(7) The process for producing chopped strands according to any one of the above (1) to (6), wherein the amount of the sizing agent attached is from 0.1 to 2 mass% in terms of solid content based on the glass fiber strands having the sizing agent attached thereto.
(8) The process for producing chopped strands according to any one of the above (1) to (7), wherein the glass fiber strands have an average filament diameter of from 6 to 23 µm, and each fiber strand contains from 100 to 4,000 glass filaments.

A fiber-reinforced polyamide molding material which is obtained by kneading chopped strands obtained by the process as defined in any one of the above (1) to (8) and a polyamide resin, and which has a glass content of from 5 to 70 mass% is also disclosed.

### EFFECTS OF THE INVENTION

According to the present invention, a novel process for producing glass fiber chopped strands capable of giving a molded product of which the mechanical strength and the water resistance will not be impaired and of which the color tone will not be deteriorate, capable of providing favorable dispersibility of glass fibers in pellets and being excellent in releasability at the time of molding, and a fiber-reinforced polyamide resin molding material using the chopped strands, are provided.

### BEST MODE FOR CARRYING OUT THE INVENTION

In the process for producing chopped strands of the present invention, the glass fiber strands are subjected to a surface treatment with a sizing agent comprising an unsaturated copolymer of maleic anhydride with an unsaturated monomer, a polyurethane resin and a silane coupling agent. The unsaturated monomer to be copolymerized with maleic anhydride to form the unsaturated copolymer is a monomer having at least two unsaturated bonds in its molecule. It may, for example, be preferably a diene compound such as butadiene, isoprene, chloroprene or 1,3-pentadiene. These monomers may be used in combination of two or more types. Among them, preferred is butadiene in view of the mechanical strength.

With respect to the proportion of maleic anhydride and the unsaturated monomer in the unsaturated copolymer, the proportion of maleic anhydride is preferably from 30 to 75 mol%, particularly preferably from 45 to 55 mol%. The copolymer having such a proportion of maleic anhydride will be soluble in an alkaline aqueous medium containing an alkaline substance (preferably an alkali metal compound, ammonia or an amine). Such a copolymer will form a salt in an alkaline aqueous medium, whereby it will be stabilized in water, such being favorable.

Further, if the proportion of maleic anhydride in the unsaturated copolymer is less than 30 mol%, the hydrophilicity of the copolymer to be obtained will be low. In such a case, it is possible to use an emulsifier so that the surface treatment of the glass fiber strands is carried out with an emulsion, but the adhesion to the matrix resin will decrease, and the mechanical strength of the molded product will decrease, such being unfavorable. Further, if the proportion of maleic anhydride exceeds 75 mol%, no further improvement in the mechanical strength of the molded product will be achieved any more, but the amount of an alkaline substance used for the neutralizing agent tends to be large, and the water resistance will be rather impaired.

The copolymer of maleic anhydride with an unsaturated monomer to be used in the present invention has a number average molecular weight of at least 5,000 and at most 100,000, preferably at least 10,000 and at most 80,000. If the average molecular weight is less than 5,000, the molded product tends to have decreased mechanical strength and water resistance, and on the contrary, if it exceeds 100,000, the viscosity of the aqueous solution of the copolymer tends to increase, which may cause problems such as thread breakage at the time of production and a decrease in the dispersibility of the glass fibers in pellets.

It is required that the sizing agent to be used in the present invention contains a polyurethane resin, to improve the color tone, to improve the dispersibility of the glass fibers in pellets, and to improve the releasability at the time of injection molding, without impairing the mechanical strength and the water resistance of the molded product. As the polyurethane resin, conventional one induced by a polymer polyol, an organic diisocyanate and if necessary, a chain elongation agent and/or a crosslinking agent, may be preferably used. The polyurethane resin is used preferably as dispersed in water in the form of e.g. an emulsion or a dispersion.

Specific examples of a preferred polymer polyol include polyester polyols (such as polyethylene adipate diol, polybutylene adipate diol, polyethylenebutylene adipate diol, polyneopentyl adipate diol, polyneopentyl terephthalate diol, polycaprolactone diol, polyvalerolactone diol and polyhexamethylenecarbonate diol); and polyether polyols (such as polyethylene glycol, polypropylene glycol, polyoxyethyleneoxypropylene glycol, polyoxytetramethylene glycol, and ethylene oxide and/or polypropylene oxide addition products of a bisphenol). The polymer polyol has a number average molecular weight of usually from 500 to 6,000, preferably from 800 to 3,000.

Specific examples of a preferred organic diisocyanate include aroamtic diisocyanates such as 2,4'-or 4,4'-diphenylmethane diisocyanate (MDI), 2,4- or 2,6-tolylene diisocyanate (TDI), 4,4'-dibenzyl diisocyanate, 1,3- or 1,4-phenylene diisocyanate, 1,5-naphthylene diisocyanate and xylylene diisocyanate; aliphatic diisocyanates such as ethylene diisocyanate, hexamethylene diisocyanate (HDI) and lysine diisocyanate; alicyclic diisocyanates such as isophorone diisocyanate (IPDI) and 4,4'-dicyclohexylmethane diisocyanate; and mixtures of two or more of them. Among them, particularly preferred is MDI, TDI, HDI or IPDI.

The chain elongation agent and/or the crosslinking agent to be used if necessary may, for example, be an active hydrogen-containing compound having a number average molecular weight of from 60 to 500, such as a polyhydric alcohol (such as a dihydric alcohol such as ethylene glycol, propylene glycol, 1,3-butylene glycol, 1,4-butanediol, 1,6-hexanediol, 3-methylpentanediol, diethylene glycol, neopentyl glycol, 1,4-bis(hydroxymethyl)cyclohexane, 1,4-bis(hydroxyethyl)benzene or 2,2-bis(4,4'-hydroxycyclohexyl)propane; a trihydric alcohol such as glycerol or trimethylolpropane; or a tetrahydric to octahydric alcohol such as pentaerythritol, diglycerol, α-methyl glucoside, sorbitol, xylite, mannite, dipentaerythritol, glucose, fructose or sucrose); a polyhydric phenol (such as a polyhydric phenol such as pyrogallol, catechol or hydroquinone; or a bisphenol such as bisphenol A, bisphenol F or bisphenol S); water, or a polyamine (such as an aliphatic polyamine (such as ethylenediamine, hexamethylenediamine or diethylenetriamine), an alicyclic polyamine (such as isophoronediamine or 4,4'-dicyclohexylmethane diamine), an aromatic polyamine (such as 4,4'-diaminodiphenylmethane), an aromatic alicyclic polyamine (such as xylylenediamine), hydrazine or a derivative thereof).

The polyol component in the polyurethane resin is preferably the above-described polyether represented by polyethylene glycol or polypropylene glycol in view of the water resistance of the molded product.

Further, the isocyanate component is preferably the above-described aliphatic isocyanate represented by hexamethylene diisocyanate or isophorone diisocyanate in view of reduced yellowing of the molded product.

The silane coupling agent contained in the sizing agent to be used in the present invention may be any silane coupling agent used for the surface treatment of glass fibers. Specific examples of a preferred silane coupling agent include aminosilanes such as γ-aminopropyltriethoxysilane, N-β-(aminoethyl)-γ-aminopropyltrimethoxysilane, N-β-(aminoethyl)-N'-β-(aminoethyl)-γ-aminopropyltriethoxysilane and γ-anilinopropyltrimethoxysilane; epoxysilanes such as γ-glycidoxypropyltrimethoxysilane and β-(3,4-epoxycyclohexyl)ethyltrimethoxysilane; vinylsilanes such as vinyltrimethoxysilane and N-β-(N-vinylbenzylaminoethyl)-γ-aminopropyltrimethoxysilane; γ-methacryloxypropyltrimethoxysilane, γ-chloropropyltrimethoxysilane and γ-mercaptopropyltrimethoxysilane. These coupling agents may be used in combination of two or more types.

The silane coupling agent is preferably the monoaminosilane or the diaminosilane among them, and particularly preferred is the monoaminosilane in view of the color tone.

The sizing agent to be used in the present invention preferably contains, in addition to the above components, an acrylic acid polymer or a copolymer of acrylic acid with at least one monomer. In such a case, the mechanical strength will be improved while deterioration of the color tone of the molded product will be suppressed, and further, particularly favorable dispersibility of the glass fibers in the molding material will be achieved, and the releasability from a mold at the time of production of the molded product will be improved.

Preferred examples of the monomer to be used for production of the copolymer with acrylic acid include ethylene, propylene, isobutylene, styrene, α-methylstyrene, vinyl acetate, butadiene, isoprene, chloroprene, an acrylic ester and a methacrylic ester. These monomers may be used in combination of two or more types.

Further, the sizing agent of the present invention preferably contains a fluorescent brightening agent with a view to improving the color tone of the molded product. The fluorescent brightening agent may be a benzoxazole, triazole, coumarin, pyrazoline, styryl or naphthalimide type. Among them, a benzoxazole type or a triazole type is more preferred. The fluorescent brightening agent is contained preferably in an amount of from 0.001 to 0.1 part by mass per 100 parts by mass of the glass fiber strands treated with the sizing agent. If the amount is less than 0.001 part by mass, no effect of improving the color tone of the molded product will be achieved. Further, if it exceeds 0.1 part by mass, such is economically unfavorable and further, the molded product tends to be dark or reddish particularly at a high processing temperature.

With respect to the contents of the unsaturated copolymer of maleic anhydride with an unsaturated monomer, the polyurethane resin and the silane coupling agent in the sizing agent to be used in the present invention, in terms of solid content, the proportion of the polyurethane resin is from 10 to 90 parts by mass, preferably from 20 to 80 parts by mass, and the proportion of the silane coupling agent is from 5 to 100 parts by mass, preferably from 20 to 50 parts by mass, per 100 parts by mass of the unsaturated copolymer. Such proportions are preferred in view of the mechanical strength of the molded product, the color tone of the molded product, the dispersibility of the glass fibers in pellets and favorable releasability at the time of injection molding. If the proportion of the polyurethane resin is higher than 90 parts by mass, the molded product tends to be inferior in the mechanical strength, and if it is lower than 10 parts by mass, the molded product tends to be inferior in the color tone and further, the dispersibility and the releasability tend to be poor. Further, if the proportion of the silane coupling agent is lower than 5 parts by mass, the molded product tends to be inferior in the mechanical strength, and if it is higher than 100 parts by mass, the mechanical strength and the durability will rather decrease and further, the color tone tends to be poor.

Further, in a case where the sizing agent contains the polyacrylic acid or the copolymer of acrylic acid with at least one monomer, the polymer is contained preferably in an amount of from 5 to 100 parts by mass, preferably from 10 to 50 parts by mass, in terms of solid content, per 100 parts by mass of the unsaturated copolymer of maleic anhydride with an unsaturated monomer. If the content of the polymer exceeds 100 parts by mass, the molded product tends to be inferior in the mechanical strength, and if it is less than 5 parts by mass, the color tone tends to be poor and in addition, some of the glass fibers in the molding material will not be dispersed, thus impairing the releasability.

Further, for the sizing agent of the present invention, as a surfactant, a nonionic surfactant such as an ethylene oxide propylene oxide copolymer, a synthetic alcohol type, a natural alcohol type, a fatty acid ester type or a distyrenated phenol type may be used.

Further, the sizing agent of the present invention may contain, in addition to the above components, a fatty acid amide or the like as a lubricant, or a quaternary ammonium salt. As the fatty acid amide, a dehydration condensate of a polyethylene polyamine such as diethylenetriamine, triethylenetetramine or tetraethylenepentamine with a fatty acid such as lauric acid, myristic acid, palmitic acid or stearic acid may be used. Further, as the quaternary ammonium salt, an alkyltrimethylammonium salt such as lauryltrimethylammonium chloride or the like may be used. Further, the sizing agent of the present invention may contain an antistatic agent represented by an inorganic salt such as lithium chloride or potassium chloride or a quaternary ammonium salt such as an ammonium chloride type or an ammonium ethosulfate type.

The sizing agent to be used in the present invention is easily obtained by mixing the unsaturated copolymer of maleic anhydride with an unsaturated monomer, the polyurethane resin in the form of an emulsion or a dispersion and the silane coupling agent in e.g. an aqueous medium, and preferably by mixing the mixture with the polyacrylic acid or the copolymer of acrylic acid with at least one monomer, and an assistant such as a fluorescent brightening agent, a surfactant, a lubricant or an antistatic agent.

In the present invention, in a case where the glass fiber strands are treated with the above sizing agent having a specific composition, it is required to apply the sizing agent to glass fiber strands consisting of glass filaments immediately after spun from a bushing. If it is attempted to apply the sizing agent to wet chopped strands after being chopped, coating irregularity may occur or the particle diameter of the product tends to be excessively large, and some of the glass fibers are likely to remain non-dispersed in the molded product. Accordingly, in the present invention, it is preferred to carry out the treatment immediately after spinning, i.e. preferably within 20 seconds, particularly preferably within 5 seconds after the spinning.

The average fiber diameter of the glass filaments forming the glass fiber strands to be treated with the sizing agent of the present invention is preferably from 6 to 23 µm, particularly preferably from 10 to 16 µm. Further, each glass fiber strand preferably contains from 100 to 4,000, particularly preferably from 800 to 3,000 glass filaments, depending upon whether one glass fiber strand is withdrawn to an impregnation die or a plurality of strands are withdrawn. If the glass fiber diameter is less than 6 µm, the impact strength of the molded product tends to decrease, and if the glass fiber diameter exceeds 23 µm, the stress at the edge portions of the glass fibers in the molded product tends to be high, and the molded product tends to have decreased tensile strength and flexural strength.

The amount of the sizing agent to be used in the present invention attached to the glass fiber strands is preferably from 0.1 to 2 mass% (glass fibers: 99.9 to 98.0 mass%), particularly preferably from 0.2 to 0.8 mass%, as calculated as solid content.

In the present invention, the glass fiber strands treated with the sizing agent are wound on e.g. a tube as wet, and the wound fiber strands are withdrawn and chopped preferably into from 1.5 to 13 mm. Otherwise, the glass fiber strands are chopped as they are without being wound on a tube to obtain wet chopped strands. Then, the wet chopped strands are dried. The drying temperature and time are optional but drying is carried out preferably at a temperature of from 120 to 180°C preferably for from 10 seconds to 10 minutes so that superfluous moisture will be removed.

The chopped strands thus produced are impregnated with a molten thermoplastic resin to produce a fiber-reinforced molding material. The thermoplastic resin may, for example, be a polyamide resin such as nylon 6, nylon 66 or aromatic nylon, or two or more types of polyamide resins, or a polymer alloy such as polyamide-polyolefin or polyamide-polyphenylene ether.

In a case where a fiber-reinforced polyamide resin molding material is produced by using a polyamide resin as the thermoplastic resin, for example, the above chopped strands are supplied to the polyamide resin molten in a screw extruder preferably while being plasticized at from 260°C to 330°C, and they are melt-kneaded. The melt-kneaded product is molded into a fibrous reinforced polyamide resin body, which is cut by e.g. a pelletizer to obtain a fiber-reinforced polyamide molding material. In the present invention, to produce the fiber-reinforced polyamide resin molding material, the above temperature range is sufficient, but particularly preferred is from 280°C to 310°C for further improvement in the dispersibility of the glass fibers in the final product.

The glass content in the thermoplastic resin molding material of e.g. a polyamide resin is preferably from 5 to 70 mass%, more preferably from 15 to 60 mass%. If the glass content of the molding material exceeds 70 mass%, impregnation with the thermoplastic resin tends to be insufficient, and the dispersibility of the glass fibers tends to be poor at the time of direct injection molding after mixing with the matrix resin. On the other hand, if the glass content in the molding material is less than 5 mass%, such a molding material is not practical considering the glass content of current glass fiber-reinforced thermoplastic resin products, and such is unfavorable in view of the cost.

### EXAMPLES

Now, the present invention will be explained in further detail with reference to Examples. However, it should be understood that the present invention is by no means restricted to such specific Examples. EXAMPLES 1 to 8 and COMPARATIVE EXAMPLES 1 to 3

A sizing agent was prepared by mixing the following raw material components in a composition as identified in Table 1.

### (Raw material components for sizing agent)

- Unsaturated copolymer of maleic anhydride with butadiene
- Polyurethane resin A (PPG-IPDI, number average molecular weight: 50,000):
   polyol component (polypropylene glycol), isocyanate component (isophorone diisocyanate)
- Polyurethane resin B (PBA-IPDI, number average molecular weight: 2,000):
   polyol component (polybutylene adipate), isocyanate component (isophorone diisocyanate)
- polyurethane resin C (PPG-TDI, number average molecular weight: 150,000):
   polyol component (polypropylene glycol), isocyanate component (tolylene diisocyanate)
- silane coupling agent A: γ-aminopropyltriethoxysilane
- silane coupling agent B: N-β-(aminoethyl)-γ-aminopropyltrimethoxysilane
- copolymer of acrylic acid with at least one monomer:
   copolymer of acrylic acid with methylacrylate (number average molecular weight: 10,000)
- fluorescent brightening agent: benzoxazole fluorescent brightening agent

Using the above prepared sizing agent, glass fiber strands consisting of glass filaments were subjected to a surface treatment within 1 second after spun from a bushing and then chopped to produce chopped strands. Each chopped strand comprised 3,000 glass filaments having an average diameter of 10 µm bundled, had an amount of the sizing agent attached of 0.45 mass% and had a length of 3 mm.

Using the chopped strands and using polyamide 66 (injection molding grade) as the matrix resin, they were kneaded and extruded by means of a twin screw extruder (screw diameter: 35 mm, 285 °C), and the extruded product was cut to produce molding material pellets (cylindrical pellets having a diameter of 3 mm and a length of 3 mm, glass fiber content: 30 mass%).

Using the molding material pellets, injection molding was carried out under a clamping pressure of 75 tons at a cylinder temperature of 300°C at a mold temperature of 80°C to obtain a molded product (a cup having a height of 100 mm, a diameter of 100 mm and a thickness of 1 mm). With respect to the molded product, the mechanical strength, the color tone, the dispersibility of the glass fibers in the pellets, the releasability at the time of injection molding, etc. were evaluated.

Physical properties of the molded products obtained in Examples and Comparative Examples are shown in Table 1. In Table 1, TS, FS, IZOD and other performances were measured as follows.
- Tensile strength (MPa): ASTM D-638
- Flexural strength (MPa): ASTM D-790
- Notched IZOD impact strength (MPa): ASTM D-256 (1/8 inch notch)
   - Tensile strength after treatment (MPa): Tensile strength after immersed in long life coolant (LLC)/water = 50/50 in volume ratio at 130°C for 500 hours.
   - Color tone evaluation: The color tone of the pellets was measured by means of Σ-90 manufactured by NIPPON DENSHOKU INDUSTRIES CO., LTD., and one having an "L" value of at least 72, an "a" value of at most 2 and a "b" value of at most 15 was rated very excellent.
   - Glass fiber dispersibility (fibers/5 g pellets): Carbon black was added to polyamide 66, and pellets were molded with the screws that have very loosely kneading condition, and 5 g of the obtained pellets were pressed at 300°C to prepare a sheet having a thickness of 0.5 mm. The number of non-dispersed glass fibers was visually measured. The smaller the number, the better, and one containing non-dispersed glass fibers of at most 50 fibers/5 g pellets was rated very excellent.
   - Releasability (kgf/cm²) :
      The force (mold release force) applied to the ejector pin when the molded product was taken out from the mold, was measured. The smaller the mold release force, the better, and one with a force of at most 30 kgf/cm² (294 Pa) was rated very excellent.

As shown in Table 1, Examples were not inferior to Comparative Examples in all characteristics of the color tone of the molded product, the dispersibility of the glass in the pellets, the releasability at the time of molding and the tensile strength after immersion in hot water. Comparative Example 1 was inferior to Example 1 in the color tone, the dispersibility of the glass in the pellets and the releasability at the time of molding. Further, Comparative Examples 2 and 3 wherein the proportions of the copolymer of maleic anhydride with butadiene and the polyurethane were out of the ranges of the present invention, were inferior in the tensile strength after immersion in hot water. Further, Examples 2 to 4 wherein the acrylic acid-methyl acrylate copolymer was used, were superior to Example 1 in the color tone of the molded product, the dispersibility of the glass in the pellets and the releasability at the time of molding.

Further, Examples 1 to 4 wherein the copolymer of maleic anhydride with butadiene having a preferred molecular weight of the present invention was used, were superior to Example 5 in the tensile strength after immersion in hot water, and were superior to Example 6 in the dispersibility of the glass in the pellets. Further, Examples 1 to 4 wherein the preferred polyurethane of the present invention was used, were superior to Example 7 in the tensile strength after immersion in hot water, and were superior to Example 8 in the color tone of the molded product.

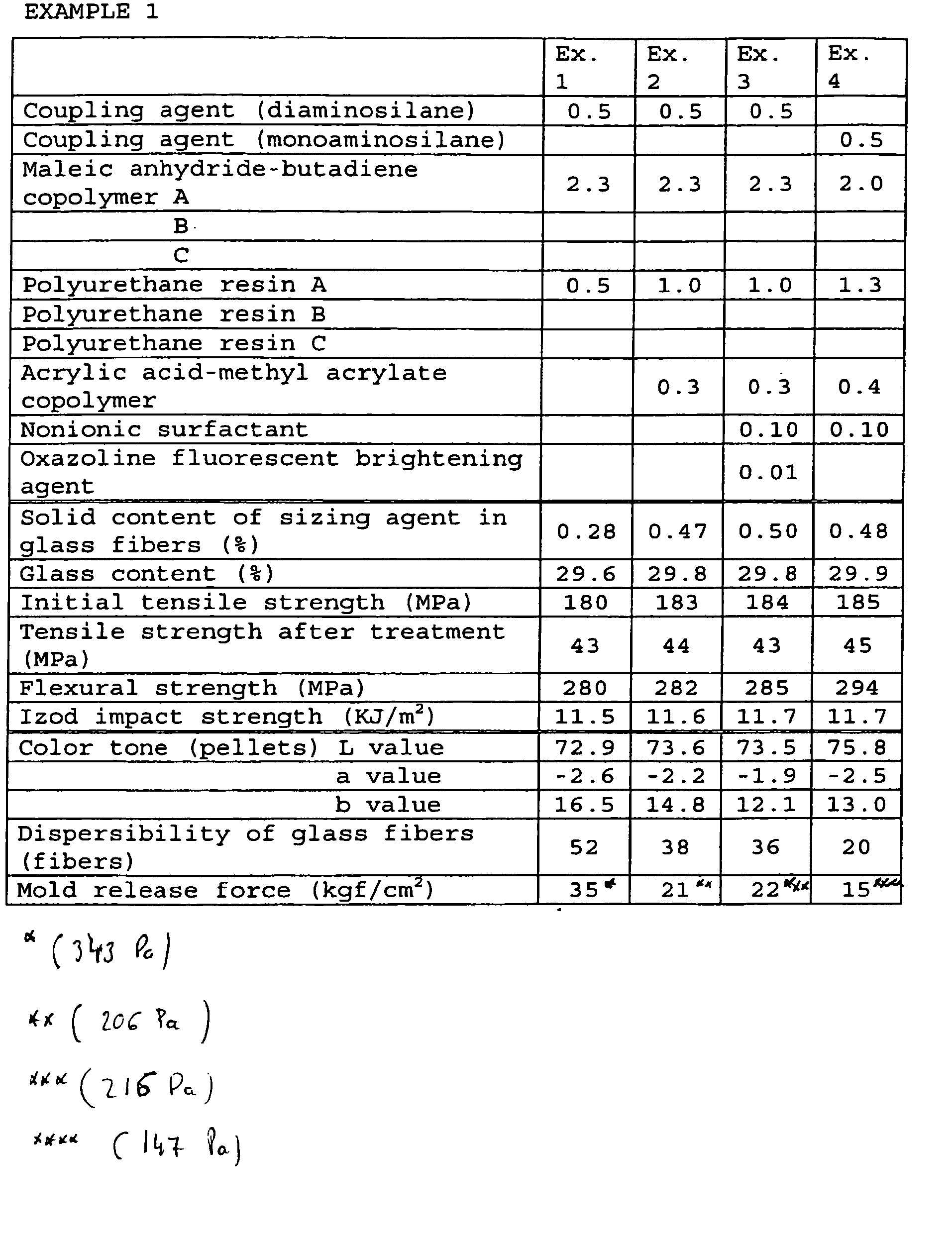

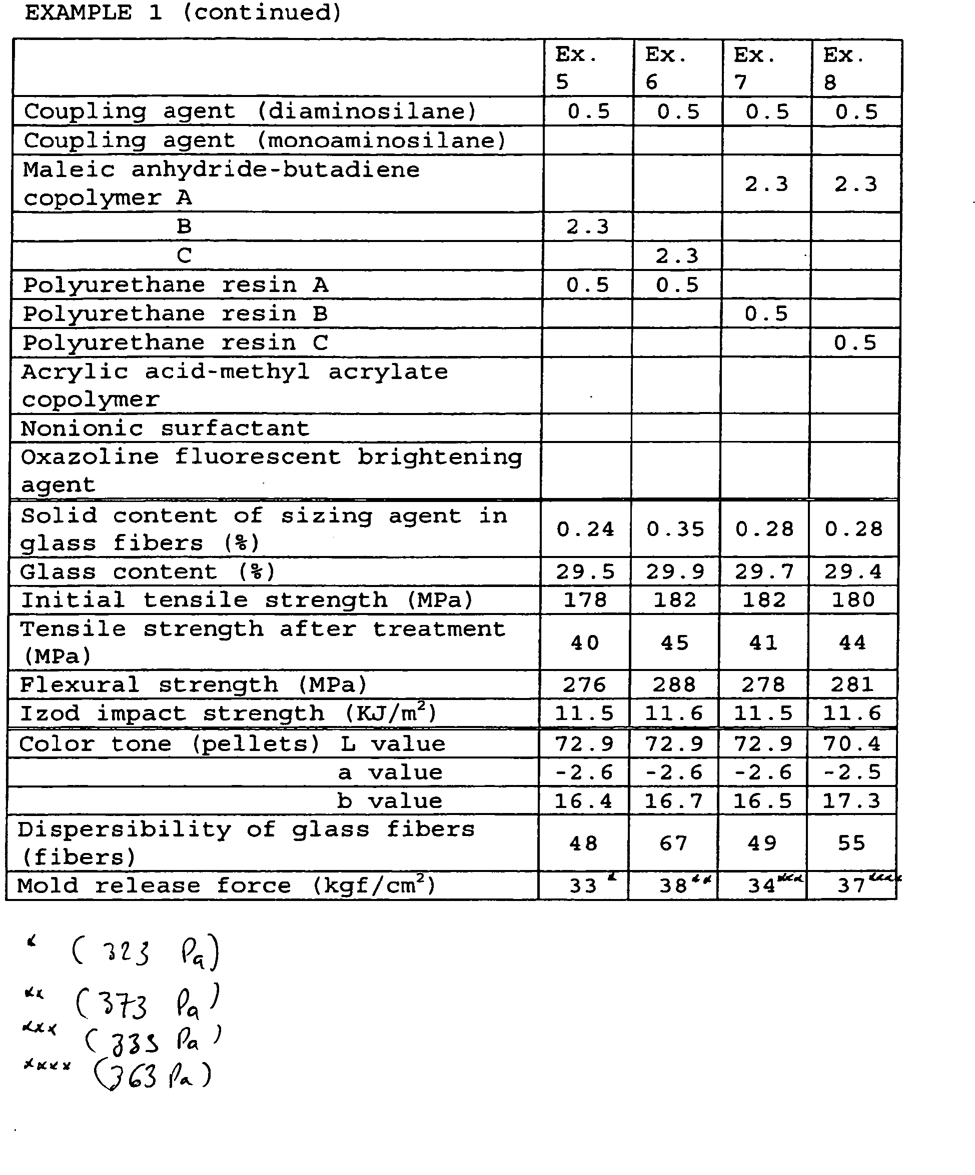

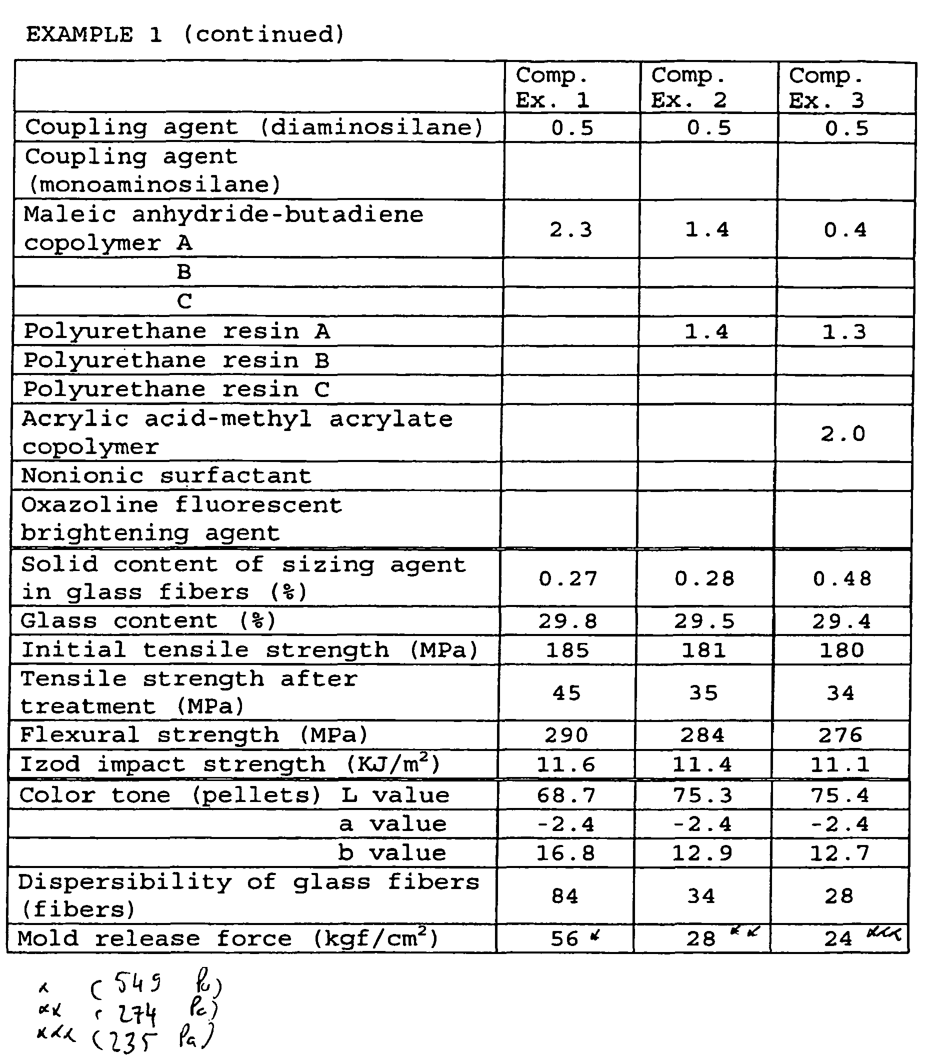

### INDUSTRIAL APPLICABILITY

Chopped strands comprising glass filaments to be obtained by the present invention and a molded product from a fiber-reinforced polyamide resin molding material using the chopped strands are excellent in heat resistance and has high mechanical strength and are thereby suitably used for various applications such as automobiles, appliances and general industrial materials.

## Claims

1. A process for producing chopped strands, which comprises subjecting glass fiber strands consisting of glass filaments spun from a bushing to a surface treatment with a sizing agent comprising, in terms of solid content, 100 parts by mass of an unsaturated copolymer of maleic anhydride with an unsaturated monomer, from 10 to 90 parts by mass of a polyurethane resin and from 5 to 100 parts by mass of a silane coupling agent, and then chopping the obtained strands.

2. The process for producing chopped strands according to Claim 1, wherein the sizing agent further contains an acrylic acid polymer or a copolymer of acrylic acid with at least one monomer in an amount of from 5 to 100 parts by mass in terms of solid content per 100 parts by mass of the unsaturated copolymer of maleic anhydride with an unsaturated monomer.

3. The process for producing chopped strands according to Claim 1 or 2, wherein the sizing agent further contains a fluorescent brightening agent.

4. The process for producing chopped strands according to any one of Claims 1 to 3, wherein the content of maleic anhydride in the unsaturated copolymer of maleic anhydride with an unsaturated monomer is from 30 to 75 mol%.

5. The process for producing chopped strands according to any one of Claims 1 to 4, wherein the unsaturated copolymer of maleic anhydride with an unsaturated monomer is soluble in an alkaline aqueous medium.

6. The process for producing chopped strands according to any one of Claims 1 to 5, wherein the polyol component constituting the polyurethane resin is an aliphatic ether.

7. The process for producing chopped strands according to any one of Claims 1 to 6, wherein the amount of the sizing agent attached is from 0.1 to 2 mass% in terms of solid content based on the glass fiber strands having the sizing agent attached thereto.

8. The process for producing chopped strands according to any one of Claims 1 to 7, wherein the glass fiber strands have an average filament diameter of from 6 to 23 µm, and each fiber strand contains from 100 to 4,000 glass filaments.

## Patentansprüche

1. Verfahren zur Herstellung von geschnittenen Glasspinnfasern, das umfasst ein Unterwerfen von Glasspinnfasern, die aus Glasfilamenten bestehen, die aus einer Buchse gesponnen sind, unter eine Oberflächenbehandlung mit einem Leimungsmittel, umfassend, bezogen auf den Feststoffgehalt, 100 Gewichtsteile eines ungesättigten Copolymers aus Maleinsäureanhydrid mit einem ungesättigten Monomer, 10 bis 90 Gewichtsteile eines Polyurethanharzes und 5 bis 100 Gewichtsteile eines Silanhaftvermittlers, und anschließend Schneiden der erhaltenen Fasern.

2. Das Verfahren zur Herstellung geschnittener Glasspinnfasern nach Anspruch 1, wobei der Haftvermittler ferner ein Acrylsäurepolymer oder ein Copolymer von Acrylsäure mit mindestens einem Monomer in einer Menge von 5 bis 100 Gewichtsteilen bezogen auf den Feststoffgehalt pro 100 Gewichtsteile des ungesättigten Copolymers von Maleinsäureanhydrid mit einem ungesättigten Monomer, enthält.

3. Das Verfahren zur Herstellung geschnittener Glasspinnfasern nach Anspruch 1 oder 2, wobei der Haftvermittler ferner einen fluoreszierenden Aufheller enthält.

4. Das Verfahren zur Herstellung geschnittener Glasspinnfasern nach einem der Ansprüche 1 bis 3, wobei der Gehalt an Maleinsäureanhydrid in dem ungesättigten Copolymer von Maleinsäureanhydrid mit einem ungesättigten Monomer im Bereich von 30 bis 75 mol% liegt.

5. Das Verfahren zur Herstellung geschnittener Glasspinnfasern nach einem der Ansprüche 1 bis 4, wobei das ungesättigte Copolymer von Maleinsäureanhydrid mit einem ungesättigten Monomer in einem basischen wässrigen Medium löslich ist.

6. Das Verfahren zur Herstellung geschnittener Glasspinnfasern nach einem der Ansprüche 1 bis 5, wobei die Polyolkomponente, die das Polyurethanharz aufbaut ein aliphatischer Ether ist.

7. Das Verfahren zur Herstellung geschnittener Glasspinnfasern nach einem der Ansprüche 1 bis 6, wobei die Menge des anhaftetenden Leimungsmittels im Bereich von 0,1 bis 2 Gewichts-%, bezogen auf den Festgehalt der Glasspinnfasern, die den Haftvermittler anhaften haben, liegt.

8. Das Verfahren zur Herstellung geschnittener Glasspinnfasern nach einem der Ansprüche 1 bis 7, wobei die Glasspinnfasern einen mittleren Filamentdurchmesser von 6 bis 23 µm aufweisen und jede Glasspinnfaser 100 bis 4000 Glasfilamente enthält.

## Revendications

1. Procédé pour produire des brins coupés, qui comprend les opérations consistant à soumettre des brins de fibres de verre, constitués de filaments de verre filés depuis une filière, à un traitement de surface avec un agent d'ensimage comprenant, en termes de teneur en extrait sec, 100 parties en masse d'un copolymère insaturé d'anhydride maléique et d'un monomère insaturé, 10 à 90 parties en masse d'une résine de polyuréthane, et 5 à 100 parties en masse d'un agent de couplage de type silane, et ensuite à couper les brins obtenus.

2. Procédé pour produire des brins coupés selon la revendication 1, dans lequel l'agent d'ensimage contient en outre un polymère d'acide acrylique ou un copolymère d'acide acrylique et d'au moins un monomère en une quantité de 5 à 100 parties en masse, en termes de teneur en extrait sec, pour 100 parties en masse du copolymère insaturé d'anhydride maléique et d'un monomère insaturé.

3. Procédé pour produire des brins coupés selon la revendication 1 ou 2, dans lequel l'agent d'ensimage contient en outre un agent azurant fluorescent.

4. Procédé pour produire des brins coupés selon l'une quelconque des revendications 1 à 3, dans lequel la teneur en anhydride maléique dans le copolymère insaturé d'anhydride maléique et d'un monomère insaturé est de 30 à 75 % en moles.

5. Procédé pour produire des brins coupés selon l'une quelconque des revendications 1 à 4, dans lequel le copolymère insaturé d'anhydride maléique et d'un monomère insaturé est soluble dans un milieu aqueux alcalin.

6. Procédé pour produire des brins coupés selon l'une quelconque des revendications 1 à 5, dans lequel le composant polyol constituant la résine de polyuréthane est un éther aliphatique.

7. Procédé pour produire des brins coupés selon l'une quelconque des revendications 1 à 6, dans lequel la quantité de l'agent d'ensimage attaché est de 0,1 à 2 % en masse, en termes de teneur en extrait sec, par rapport aux brins de fibres de verre auxquels est attaché l'agent d'ensimage.

8. Procédé pour produire des brins coupés selon l'une quelconque des revendications 1 à 7, dans lequel les brins de fibres de verre ont un diamètre de filament moyen de 6 à 23 µm, et chaque brin de fibres contient de 100 à 4000 filaments de verre.
